# EUROPÄISCHE PATENTSCHRIFT

(11) **EP 1 386 100 B1**
(45) Veröffentlichungstag und Bekanntmachung des Hinweises auf die Patenterteilung: **22.03.2006**
(21) Anmeldenummer: 02737801.7
(22) Anmeldetag: 16.04.2002
(51) Int. Cl.: F16J 15/16

(54) **ANORDNUNG MIT EINEM EINEM WELLENLAGER ZUGEORDNETEN ABSCHLEUDERRING UND EINER EINEM DICHTSPALT ZUGEORDNETEN DICHTUNG**
ARRANGEMENT COMPRISING A SLINGER ASSOCIATED WITH A SHAFT BEARING AND A GASKET ASSOCIATED WITH A SEALING GAP
ENSEMBLE COMPRENANT UNE BAGUE DE PROJECTION ASSOCIEE A UN PALIER D'ARBRE ET UNE GARNITURE D'ETANCHEITE ASSOCIEE A UN INTERSTICE D'ETANCHEITE

(30) Priorität: 09.05.2001 DE 10122440
(43) Veröffentlichungstag der Anmeldung: 04.02.2004
(73) Patentinhaber: MTU Aero Engines GmbH, 80995 München (DE)
(72) Erfinder: WEILER, Wolfgang, 85221 Dachau (DE)
(86) Internationale Anmeldenummer: PCT/DE2002/001403
(87) Internationale Veröffentlichungsnummer: WO 2002/090802

(56) Entgegenhaltungen:
- CH-A- 658 707
- DE-A- 3 737 932
- GB-A- 1 308 098
- US-A- 2 254 862

## Beschreibung

Die Erfindung betrifft eine Anordnung mit einem ölgeschmierten, eine Welle tragenden Drehlager in einer Lagerkammer, mit einem dem Drehlager zugeordneten Abschleuderring und mit einer die Lagerkammer im Bereich des Wellendurchtritts abdichtenden, ein Dichtungsgehäuse aufweisenden Dichtung, gemäß dem Oberbegriff des Patentanspruches 1.

insbesondere bei Turbomaschinen muss bekanntlich die beispielsweise als Spalt-, Gleitring- oder Bürstendichtung ausgebildete Dichtung zwischen Welle und Gehäuse wegen der hohen Umfangsgeschwindigkeit berührungsfrei erfolgen.

Ferner führt ein direkter Kontakt zwischen dem abzudichtenden Medium, z.B. Schmierstoff, und bestimmten Bauelementen der Dichtung infolge Verschmutzung und/oder chemischen Veränderungen zu Ablagerungen wie Schmutz- und/oder Ölkohle auf den Dichtungselementen. Dies verschlechtert erfahrungsgemäß die Dichtungsfunktion und hat oft den Ausfall der Dichtung zur Folge.

Aus der US-A-2 254 862 ist eine gattungsgemäße Anordnung für Turbomaschinen bekannt, bei welcher der Wellendurchtritt am Dichtungsgehäuse im Maschinenstillstand stärker abgedichtet wird, als im Betrieb mit rotierender Welle. Hierzu wird im Stillstand wenigstens ein zusätzliches Dichtelement aktiviert und zwar bevorzugt mit Hilfe des Schmieröldruckes. Die dynamische Abdichtung wird mittels eines Abschleuderringes verbessert, der als "slinger" (54) oder "dish-shaped oil guard" (76) bezeichnet ist. Die einander zugewandten Flächen des Dichtungsgehäuses und des Abschleuderrings verlaufen parallel zueinander, dies zunächst radial und anschließend konisch nach außen. Am Dichtungsgehäuse können über den Umfang eine Ringnut sowie eine Nase angeformt sein, welche die Ölrückhaltwirkung noch verstärken.

Aufgabe der Erfindung ist es, eine solche Anordnung zu optimieren.

Ausgehend von einer Anordnung der eingangs genannten Art ist diese Aufgabe erfindungsgemäß dadurch gelöst, dass die einander zugewandten Flächen von Abschleuderring und Dichtungsgehäuse divergierend zueinander verlaufen.

Durch den erfindungsgemäß divergierenden Spaltverlauf mit Wirbelströmung werden mit Sicherheit die gefürchteten Schmutz- und/oder Ölkohleablagerungen auf Dichtungselementen und die damit zusammenhängenden negativen Folgen vermieden.

Weitere Merkmale der Erfindung ergeben sich aus den Unteransprüchen.

Die erfindungsgemäße Ausbildung der Anordnung ist verblüffend einfach und sichert zuverlässig bei allen Betriebszuständen den Austrag von in der Lagerkammer befindlichen Medien, insbesondere von Ölnebel und den darin befindlichen schweren Bestandteilen, wie Schmutz und Schmieröltröpfchen aus dem Bereich der Dichtung, so dass ggf. zum Ausfall der Dichtung führende Ablagerungen bei allen Betriebszuständen der mit einer solchen Anordnung ausgestatteten Turbomaschine verhindert werden.

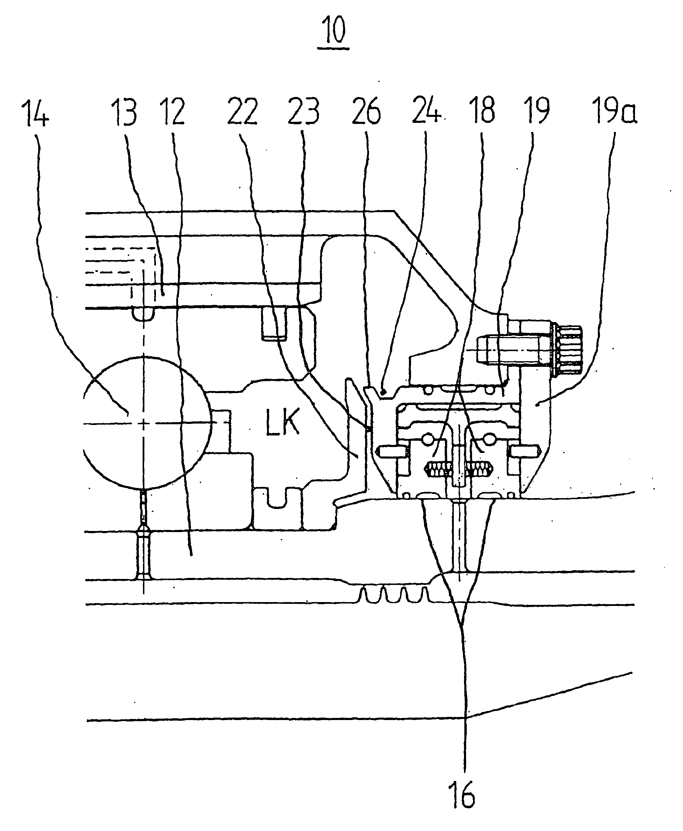

Die Erfindung ist nachfolgend anhand eines in der Zeichnung mehr oder minder schematisch dargestellten Ausführungsbeispiels beschrieben.

Die einzige Figur zeigt einen Axialschnitt einer Lagerkammer einer nur angedeuteten Turbomaschine.

Eine insgesamt mit der Bezugsziffer 10 bezeichnete Turbomaschine üblicher Bauart umfasst in einer nur teilweise dargestellten Lagerkammer LK ein zwischen einer Welle 12 und einem Gehäuseteil 13 angeordnetes Drehlager 14 sowie eine der Welle zugeordnete Dichtung 18, die von einem Dichtungsgehäuse 19 umschlossen ist, dem seinerseits ein Deckel 19a zugeordnet ist. Welle 12 und Dichtung 19 sind durch den Dichtungsspalt 16 berührungsfrei. Dem Drehlager 14 ist ein auf der Welle 12 aufgesetzter, der Dichtung 18 unmittelbar benachbarter Abschleuderring 22 zugeordnet.

Die einander zugewandten Bereiche von Abschleuderring 22 und dem Dichtungsgehäuse 19 - also deren Außenflächen - sind jeweils so gestaltet, dass sie zunächst zur Welle 12 radial und anschließend konisch nach außen verlaufend einen Ringspalt 23 zwischen sich einschließen. Die den Ringspalt bildenden Außenflächen sollen im wesentlichen divergierend nach innen oder außen zu verlaufen.

An das Dichtungsgehäuse 19 sind auf der dem Abschleuderring zugewandten Seite dem Ringspalt 23 abgewandt eine am Umfang befindliche Ringnut 24 sowie eine Nase 26 angeformt, die sich über den gesamten Umfang erstrecken.

Die Wirkungsweise der vorstehend beschriebenen Anordnung ist folgende:

Einem im Ringspalt 23, also zwischen den einander zugewandten Außenflächen von Abschleuderring 22 und Dichtungsgehäuse 19 befindliches Medium - z.B. Luft, insbesondere aber vom Drehlager 14 verursachter Ölnebel - wird mit beginnender Rotation der Welle 12 eine Verwirbelung aufgeprägt, die sich infolge der gewählten Formgebung der Außenflächen von Abschleuderring und Dichtungsgehäuse als radial nach außen gerichtete Wirbelströmung ausgebildet, durch die alle im Medium befindlichen schweren Bestandteile, insbesondere auch Schmieröltröpfchen, auszentrifugiert werden.

Auf diese Weise werden alle Ablagerungen auf Bauelementen der der Dichtspalte 16 zugeordneten Dichtung 18 vermieden, die bisher zu unerwünschten Betriebsstörungen geführt haben.

Auch die bei Stillstand der Turbomaschine auftretenden Öltropfen, die durch den im Außenbereich konisch verlaufenden Ringspalt auf die bei Inbetriebnahme der Turbomaschine rotierende Rückseite des Abschleuderringes gelangen, werden auf die vorstehend beschriebene Weise auszentrifugiert.

Die am Dichtungsgehäuse angeordnete Ringnut in Verbindung mit der ebenfalls dort angeordneten Nase verhindern im Stillstand der Anordnung das Eindringen von an den Wänden der Lagerkammer ablaufendem Öl in die Dichtung.

Die Breite des zwischen den einander zugewandten Flächen von Dichtungsgehäuse und Abschleuderringring befindlichen Ringspaltes beträgt vorzugsweise zwischen 0,5 und 1,2 mm.

Es ist vorteilhaft, wenn mindestens eine Fläche von Abschleuderring und Dichtungsgehäuse aufgerauht ist.

## Patentansprüche

1. Anordnung mit einem ölgeschmierten, eine Welle (12) tragenden Drehlager (14) in einer Lagerkammer (LK) mit einem dem Drehlager (14) zugeordneten Abschleuder ring (22) end mit einer die Lagerkammer (LK) im Bereich des Wellendurchtritts abdichtenden, ein Dichtungsgehäuse (19) aufweisenden, vorzugsweise als Spalt-, Gleitring- oder Bürstendichtung ausgeführten Dichtung (18), insbesondere für Turbomaschinen, wobei die einander zugewandten Flächen von Dichtungsgehäuse (19) und Abschleuderring (22) zunächst radial nach außen und anschließend konisch nach außen verlaufend ausgebildet sind und zwischen sich einen Ringspalt (23) einschließen, um dem in dem Ringspalt (23) befindlichen Medium bei Rotation eines der Bauteile eine Wirbelströmung aufzuprägen, durch die im Medium befindliche schwere Bestandteile auszentrifugiert werden, **dadurch gekennzeichnet, dass** die einander zugewandten Flächen von Abschleuderring (22) und Dichtungsgehäuse (19) divergierend zueinander verlaufen.

2. Anordnung nach Anspruch 1, **dadurch gekennzeichnet, dass** die Breite des zwischen den einander zugewandten Flächen von Dichtungsgehäuse (19) und Abschleuderring (22) befindlichen Ringspaltes (23) zwischen 0,5 und 1,2 mm beträgt.

3. Anordnung nach Anspruch 1 oder 2, **dadurch gekennzeichnet, dass** mindestens eine Fläche von Abschleuderring (22) und Dichtungsgehäuse (19) aufgerauht ist.

## Claims

1. Arrangement comprising an oil-lubricated rotary bearing (14) supporting a shaft (12) in a bearing chamber (LK), with a centrifuging ring (22) co-operating with the rotary bearing (14) and a seal (18), preferably in the form of a split seal, face seal or brush seal having a seal housing (19) sealing the bearing chamber (LK) in the region where the shaft extends through, in particular for turbo engines, and the mutually facing surfaces of the seal housing (19) and centrifuging ring (22) extend initially radially outwards and then conically outwards enclosing an annular gap (23) between them in order to impart a turbulent flow to the medium disposed in the annular gap (23) as one of the components rotates, by means of which heavy components contained in the medium are centrifuged out, **characterised in that** the mutually facing surfaces of the centrifuging ring (22) and seal housing (19) extend in a divergent arrangement with respect to one another.

2. Arrangement as claimed in claim 1, **characterised in that** the width of the annular gap (23) disposed between the mutually facing surfaces of the seal housing (19) and centrifuging ring (22) is between 0.5 and 1.2 mm.

3. Arrangement as claimed in claim 1 or 2, **characterised in that** at least one surface of the centrifuging ring (22) and seal housing (19) is roughened.

## Revendications

1. Ensemble comportant un palier rotatif (14) dans une chambre d'assise (LK), lubrifié à l'huile et portant un arbre (12), avec une bague de projection (22) associée au palier rotatif (14) et avec une garniture d'étanchéité (18), conçue de préférence sous forme de boîte à labyrinthe, de garniture mécanique d'étanchéité ou de garniture d'étanchéité à brosses, munie d'un boîtier d'étanchéité (19) et destinée à rendre étanche la chambre d'assise (LK) dans la zone de passage de l'arbre, en particulier pour des turbomoteurs, les surfaces orientées l'une vers l'autre du boîtier d'étanchéité (19) et de la bague de projection (22) étant réalisées tout d'abord selon une orientation dans le sens radial vers l'extérieur et ensuite avec une forme conique vers l'extérieur et incluant entre elles une fente annulaire (23) afin d'appliquer un mouvement tourbillonnaire au fluide contenu dans la fente annulaire (23) au moment de la rotation de l'une des pièces, lequel mouvement tourbillonnaire permet d'extraire par centrifugation les particules lourdes contenues dans le fluide, **caractérisé en ce que** les surfaces orientées l'une vers l'autre de la bague de projection (22) et du boîtier d'étanchéité (19) s'étendent en divergeant l'une de l'autre.

2. Ensemble selon la revendication 1, **caractérisé en ce que** la largeur de la fente annulaire (23), située entre les surfaces orientées l'une vers l'autre du boîtier d'étanchéité (19) et de la bague de projection (22), est comprise entre 0,5 et 1,2 mm.

3. Ensemble selon la revendication 1 ou 2, **caractérisé en ce qu'**au moins une surface de la bague de projection (22) et du boîtier d'étanchéité (19) comporte une rugosité.
